# DEMANDE DE BREVET EUROPEEN

(11) **EP 1 734 278 A2**
(43) Date de publication de la demande: **20.12.2006**
(21) Numéro de dépôt: 06300502.9
(22) Date de dépôt: 22.05.2006
(51) Int. Cl.: F16F 13/28

(54) **Articulation hydroélastique comportant un circuit de liaison pour le liquide**

(30) Priorité: 14.06.2005 FR 0551611
(71) Demandeur: Société de Technologie Michelin, 63000 Clermont-Ferrand (FR); MICHELIN Recherche et Technique S.A., 1763 Granges-Paccot (CH)
(72) Inventeur: Souyri, Philippe, 63260 Saint-Genes-du-Retz (FR)
(74) Mandataire: Laget, Jean-Loup

(57) **Abrégé**

Articulation hydroélastique comportant un élément élastiquement déformable (6) conformé de manière à définir, entre deux armatures (1, 2), un volume contenant un liquide d'amortissement et comprenant au moins deux chambres (10, 11) opposées selon une direction d'amortissement prédéfinie, ladite articulation comportant un circuit de liaison reliant lesdites chambres et des moyens de contrôle d'écoulement (26, 27) commutables dans un premier état asymétrique dans lequel la résistance à l'écoulement du circuit de liaison est plus faible dans un premier sens allant d'une première desdites chambres à une seconde desdites chambres que dans un second sens allant de ladite seconde chambre à ladite première chambre et un second état asymétrique dans lequel la résistance à l'écoulement du circuit de liaison est plus faible dans ledit second sens que dans ledit premier sens.

## Description

La présente invention se rapporte au domaine des articulations hydroélastiques du type destiné à assembler deux pièces en amortissant des vibrations transmises entre l'une et l'autre. Une telle articulation comporte une armature extérieure et une armature intérieure disposées l'une autour de l'autre et un élément élastiquement déformable agencé entre lesdites armatures de manière à permettre un déplacement relatif entre lesdites armatures, ledit élément élastiquement déformable étant conformé de manière à définir, entre lesdites armatures, un volume contenant un liquide d'amortissement et comprenant au moins deux chambres opposées selon une direction d'amortissement prédéfinie.

Les articulations de ce type ont deux fonctions principales : offrir des degrés de liberté entres les pièces qu'elles assemblent et atténuer la transmission de vibrations entre l'une et l'autre de ces pièces.

Dans le domaine de la construction des véhicules automobiles, ces articulations ont d'abord été utilisées pour l'amortissement du groupe propulseur par rapport à la structure principale ou caisse d'un véhicule, puis aussi pour l'amortissement des organes de liaison au sol, comme les triangles de suspension des trains de roues, par rapport à la structure principale.

Dans le second cas, ce sont les modes de déplacement dans la direction longitudinale du véhicule dont l'amortissement est particulièrement visé, comme le mouvement de recul d'une roue au contact d'un obstacle. Des sources de vibrations connues au niveau des organes de liaison au sol d'un véhicule sont aussi, par exemple, la non-uniformité des pneumatiques en roulement, les défauts des disques de frein et les dispositifs d'assistance au freinage. Les vibrations des organes de liaison au sol comportent généralement des fréquences de résonance relativement basses, par exemple entre 15 et 20 Hz, et des amplitudes relativement élevées, de sorte qu'elles sont perceptibles par les occupants du véhicule si incorrectement amorties. Des vibrations à fréquence plus élevée sont aussi présentes et influencent le confort du véhicule sur le plan acoustique.

Schématiquement, lorsqu'une sollicitation vibratoire est exercée sur l'une des armatures, au moins selon la direction d'amortissement, celle-ci entraîne une déformation élastique de l'élément déformable, qui est fait par exemple en élastomère, une variation du volume des chambres, une différence de pression entre elles et, finalement, un écoulement de liquide d'amortissement par un circuit de liaison reliant les chambres. Il est notamment possible de réaliser le circuit de liaison sous la forme d'un canal résonant de section limitée. Ainsi, en raison de l'inertie du liquide et de manière amplifiée par la section limitée du canal résonant, qui provoque une augmentation de la vitesse du liquide, cet écoulement est déphasé avec la force excitatrice, ce qui est à l'origine d'un amortissement de la sollicitation transmise à la deuxième armature. On mesure les caractéristiques d'amortissement de ce type d'articulation par une raideur dynamique qui est le rapport entre la sollicitation transmise à la deuxième armature et le déplacement vibratoire appliqué à la première. Une telle raideur dynamique varie avec la fréquence et l'amplitude du déplacement excitateur. En utilisant une notation classique en nombres complexes pour les grandeurs harmoniques déplacement d'entrée et sollicitation de sortie, cette raideur dynamique s'exprime sous la forme d'un nombre complexe caractérisé par une amplitude appelée rigidité et une phase appelée déphasage.

De manière connue, la raideur dynamique peut être adaptée par le choix des composition et géométrie de l'élément déformable, de la viscosité du liquide d'amortissement, qui est par exemple un mélange eau glycol, et de la section et de la longueur du canal résonant, afin de régler la fréquence de résonance de l'articulation. Cette fréquence de résonance correspond à la fréquence à laquelle les performances d'amortissement de l'articulation sont les meilleures, le déphasage étant maximal.

US 4687223 divulgue une articulation hydroélastique pour la liaison au sol d'un véhicule, dans laquelle les deux chambres de liquide sont espacées dans la direction longitudinale du véhicule et sont reliées par un passage muni d'une électrovanne à solénoïde. L'électrovanne est maintenue ouverte par un ressort lorsque le solénoïde n'est pas alimenté, de manière à permettre le va-et-vient du liquide entre les chambres et est fermée lorsque le solénoïde est alimenté, de manière à empêcher un écoulement de liquide entre les chambres et donc à accroître la rigidité de l'articulation dans la direction longitudinale du véhicule. Ce système sert à améliorer la stabilité du véhicule en virage.

DE19739803 décrit une articulation hydroélastique pour la fixation d'un moteur à la caisse d'un véhicule. Une vanne d'amortissement est logée dans une chambre principale de liquide. Cette chambre est située du côté de l'articulation tourné vers la caisse du véhicule, de manière à recevoir les chocs vibratoires en premier lieu, avant la chambre auxiliaire située du côté de l'articulation tourné vers le groupe motopropulseur. Une unité de commande déclenche l'alimentation de l'électroaimant de la vanne lorsqu'un capteur de choc détecte un choc, de manière à permettre à des petites quantités de liquide de circuler entre la chambre principale et la chambre auxiliaire à travers des canaux étroits d'une plaque d'amortissement. Après amortissement du choc, l'alimentation de l'électroaimant est interrompue et la vanne d'amortissement prend un état neutre. La vanne d'amortissement se ferme seulement si la pression du côté de la chambre auxiliaire devient plus grande que la pression du côté de la chambre principale.

Un but de l'invention est de fournir une articulation hydroélastique, notamment pour l'assemblage des organes de liaison au sol d'un véhicule, dont les caractéristiques d'amortissement puissent s'adapter à différentes situations de fonctionnement du véhicule. Un autre but de l'invention est d'obtenir ce résultat avec un dispositif dont l'encombrement et/ou le prix de revient soient avantageux.

Pour cela, l'invention propose une articulation hydroélastique destinée à assembler deux pièces en amortissant des vibrations transmises entre l'une et l'autre, ladite articulation comportant une armature extérieure et une armature intérieure disposées l'une autour de l'autre et un élément élastiquement déformable agencé entre lesdites armatures de manière à permettre un déplacement relatif entre lesdites armatures, ledit élément élastiquement déformable étant conformé de manière à définir, entre lesdites armatures, un volume contenant un liquide d'amortissement et comprenant au moins deux chambres opposées selon une direction d'amortissement prédéfinie, ladite articulation comportant un circuit de liaison reliant lesdites chambres et des moyens de contrôle d'écoulement commutables dans plusieurs états pour modifier une résistance à l'écoulement dudit circuit de liaison entre les deux chambres,
caractérisée par le fait que lesdits moyens de contrôle d'écoulement présentent un premier état asymétrique dans lequel la résistance à l'écoulement du circuit de liaison est plus faible dans un premier sens allant d'une première desdites chambres à une seconde desdites chambres que dans un second sens allant de ladite seconde chambre à ladite première chambre et un second état asymétrique dans lequel la résistance à l'écoulement du circuit de liaison est plus faible dans ledit second sens que dans ledit premier sens. En offrant la possibilité de traiter différemment les débits de liquide selon leur sens de circulation entre les chambres, une telle articulation permet d'obtenir une rigidité réglable pouvant être réglée à une valeur plus faible ou plus forte vis-à-vis des efforts ou des déplacements exercés dans un sens particulier que dans les autres sens, selon les besoins existant dans l'application visée.

Avantageusement, le premier état asymétrique et le second état asymétrique sont deux états passants unidirectionnels dans lesquels les moyens de contrôle d'écoulement interdisent un écoulement de liquide d'amortissement dans le second sens et dans le premier sens respectivement. Ainsi, l'articulation peut retenir temporairement un décalage dans un sens que l'on a sélectionné tant que cela est souhaité.

De préférence, lesdits moyens de contrôle d'écoulement comportent deux vannes commandées agencées dans le circuit de liaison entre ladite première chambre et ladite seconde chambre, chacune desdites vannes présentant un état passant bidirectionnel et un état passant unidirectionnel, une première desdites vannes présentant un état passant unidirectionnel orienté dans ledit premier sens et une seconde desdites vannes présentant un état passant unidirectionnel orienté dans ledit second sens. Ainsi, les moyens de contrôle d'écoulement peuvent offrir plus de deux états de fonctionnement de l'articulation, par exemple quatre états de fonctionnement en commutant indépendamment les deux vannes. De plus, ce type de vanne peut être réalisé avec des composants de faible encombrement, permettant ainsi par exemple de loger le circuit de liaison et les moyens de contrôle d'écoulement à l'intérieur d'une articulation de taille ordinaire.

Avantageusement, lesdites deux vannes sont agencées en série entre la première chambre et la seconde chambre. Ainsi, selon l'état de chacune des deux vannes, on obtient un circuit de liaison qui peut être commuté dans jusqu'à quatre états distincts : un état passant bidirectionnel (les deux vannes étant dans l'état passant bidirectionnel), un état passant unidirectionnel dans chaque sens (une des deux vannes étant dans l'état passant unidirectionnel et l'autre dans l'état passant bidirectionnel) et un état bloqué (les deux vannes étant dans l'état passant unidirectionnel). Un tel mode de réalisation présente l'avantage de répartir la fonction d'obturation du circuit entre les deux vannes commandées. Chaque vanne dans l'état passant unidirectionnel présente un sens bloqué, c'est-à-dire le sens opposé au sens passant. Ainsi, la première vanne dans l'état passant unidirectionnel assure l'obturation du circuit vis à vis des courants de liquide et des ondes de pression allant dans le second sens, tandis que la seconde vanne dans l'état passant unidirectionnel assure l'obturation du circuit vis à vis des courants de liquide et des ondes de pression allant dans le premier sens. En variante, les deux vannes peuvent être agencées en parallèle entre la première chambre et la seconde chambre.

De préférence, la première vanne est agencée du côté de la seconde chambre et ladite seconde vanne est agencée du côté de la première chambre. Grâce à cet agencement, quand une vanne est placée dans l'état passant unidirectionnel pour arrêter les courants de liquide et les ondes de pression allant dans le sens bloqué de la vanne, ces ondes et courants sont arrêtés à proximité de la chambre d'où ils proviennent. Autrement dit, les courants et ondes de pression devant être arrêtés ne disposent pas d'un volume important pour se propager en amont de la vanne qui les arrête, c'est-à-dire entre la chambre et la vanne, ce qui contribue à rigidifier l'articulation dans cet état. De plus, cet agencement facilite le placement des actionneurs des vannes. L'agencement inverse est aussi possible.

De préférence, le circuit de liaison comporte des moyens de guidage d'écoulement pour guider un écoulement du liquide d'amortissement entre lesdites chambres, chacune des deux vannes commandées comprenant un clapet agencé à l'intérieur desdits moyens de guidage d'écoulement et mobile entre une position d'obturation correspondant à l'état passant unidirectionnel de la vanne, dans laquelle ledit clapet sépare deux portions des moyens de guidage d'écoulement et au moins une position d'ouverture correspondant à l'état passant bidirectionnel de la vanne, dans laquelle le clapet rétablit une continuité fluidique entre les deux portions des moyens de guidage d'écoulement, un organe de rappel sollicitant ledit clapet vers ladite position d'obturation et un actionneur apte à déplacer ledit clapet vers ladite au moins une position d'ouverture, le clapet dans ladite position d'obturation étant agencé de manière que la pression du liquide d'amortissement dans une desdites portions des moyens de guidage d'écoulement sollicite ledit clapet vers la position d'ouverture à l'encontre dudit organe de rappel tandis que la pression du liquide d'amortissement dans l'autre desdites portions des moyens de guidage d'écoulement sollicite ledit clapet vers la position d'obturation. Ce mode de réalisation des vannes est avantageux parce que les ondes et courants de liquide allant dans le sens bloqué du clapet tendent à pousser celui-ci dans la position d'obturation, par exemple contre un siège de clapet agencé dans les moyens de guidage d'écoulement. Le déplacement du clapet dans la position d'obturation ne nécessite donc pas un effort de fermeture élevé et peut donc être assuré par exemple par un ressort très faiblement taré fournissant un effort de fermeture relativement faible. Il en résulte que l'actionneur servant à déplacer le clapet vers la position passante contre l'organe de rappel n'a pas besoin de fournir une puissance très élevée, de sorte que la vanne peut être mise en oeuvre avec un actionneur de faible puissance et de faible encombrement.

Avantageusement, le clapet est guidé selon une direction correspondant sensiblement à la direction d'écoulement du liquide d'amortissement dans lesdits moyens de guidage d'écoulement.

Selon un mode de réalisation particulier, lesdits moyens de guidage d'écoulement comprennent un boîtier agencé à l'extérieur de l'armature extérieure de l'articulation, ledit boîtier comportant des parois délimitant un volume intérieur, lesdites parois étant percées de deux ouvertures agencées de manière à faire communiquer ledit volume intérieur en direction de chacune des deux chambres, ledit clapet étant mobile dans ledit volume intérieur, ledit clapet étant apte à s'appliquer de manière étanche contre la face intérieure d'une paroi du boîtier autour d'une desdites ouvertures. Avantageusement, l'actionneur est lié au boîtier. Un tel boîtier extérieur présente l'avantage de pouvoir former un canal court et de grande section entre les deux chambres, ce qui améliore le filtrage des fréquences élevées dont l'influence est déterminante sur le confort de la liaison au sol, par exemple dans la plage comprise entre 100 et 300 Hz.

Différents types d'organes de rappel peuvent être employés, par exemple un ressort métallique, un ressort pneumatique ou en caoutchouc ou magnétique. Avantageusement, ledit organe de rappel est un ressort hélicoïdal en appui entre le clapet et une paroi du boîtier. Un boîtier séparé peut être prévu pour chacune des deux vannes.

Avantageusement, les clapets des deux vannes sont agencés dans deux volumes intérieurs d'un boîtier commun présentant une paroi interne séparant les deux volumes intérieurs, ladite paroi interne étant percée d'une ouverture de liaison reliant les deux volumes intérieurs, les sièges de clapet des deux vannes étant formés sur les deux faces de ladite paroi interne autour de ladite ouverture de liaison. Ce mode de réalisation permet de minimiser l'encombrement des vannes.

Avantageusement, les deux chambres sont définies par des dégagements ménagés sur la surface de l'élément élastiquement déformable tournée vers l'armature extérieure.

Selon un autre mode de réalisation particulier, l'articulation comporte un élément de support intermédiaire agencé entre l'armature extérieure et l'élément élastiquement déformable, ledit élément de support comportant une première portion d'extrémité située au droit de la première chambre, une deuxième portion d'extrémité située au droit de la deuxième chambre et une portion intermédiaire reliant lesdites première et deuxième portions d'extrémité en étant insérée hermétiquement entre l'armature extérieure et l'élément élastiquement déformable, ledit circuit de liaison comportant un canal de liaison ménagé dans ledit élément de support, ledit canal de liaison présentant deux extrémités communiquant avec les première et deuxième chambres respectivement, lesdites première et deuxième vannes comportant chacune un actionneur fixé à l'une respective desdites portions d'extrémité et un clapet mobile apte à obturer ledit canal de liaison dans l'état passant unidirectionnel de la vanne.

De préférence, l'articulation présente une forme globale à section circulaire, l'élément de support présentant une forme cintrée correspondante.

Selon un mode de réalisation particulier, ledit circuit de liaison et lesdits moyens de contrôle d'écoulement sont agencés essentiellement entre l'armature extérieure et l'élément élastiquement déformable.

Selon un mode de réalisation particulier, le circuit de liaison comporte une première branche de circuit ayant deux extrémités en communication avec les deux chambres respectivement et une seconde branche de circuit ayant deux extrémités en communication avec les deux chambres respectivement, ladite seconde branche de circuit contournant ladite première branche de circuit, les moyens de contrôle d'écoulement comportant une vanne agencée sur chacune des deux branches.

De préférence, la première branche de circuit comporte un premier organe d'obturation unidirectionnel qui est passant dans le premier sens et bloqué dans le second sens et une première vanne commandée agencée en série avec ledit premier organe d'obturation unidirectionnel, ladite seconde branche de circuit comportant un second organe d'obturation unidirectionnel qui est passant dans le second sens et bloqué dans le premier sens et une seconde vanne commandée agencée en série avec ledit second organe d'obturation unidirectionnel, lesdites première et seconde vannes commandées présentant chacune un état passant pour autoriser un écoulement dans la branche de circuit correspondante et un état non passant pour interdire un écoulement dans la branche de circuit correspondante.

De préférence, lesdits moyens de contrôle d'écoulement comportent au moins une électrovanne, par exemple avec un actionneur à électroaimant ou un actionneur à réluctance variable.

Avantageusement, lesdits moyens de contrôle d'écoulement présentent un état non passant interdisant tout écoulement dans le circuit de liaison dans les deux sens entre les deux chambres. Un tel état permet d'obtenir un mode de fonctionnement de l'articulation à forte rigidité.

Avantageusement, lesdits moyens de contrôle d'écoulement présentent un état passant symétrique dans lequel la résistance à l'écoulement dans le circuit de liaison entre les deux chambres est sensiblement égale dans les deux sens. Un tel état permet par exemple d'obtenir un mode de fonctionnement de l'articulation à faible rigidité.

Avantageusement, au moins un canal de surpression de plus grande section efficace que ledit circuit de liaison relie lesdites deux chambres en contournant ledit circuit de liaison, ledit canal de surpression comportant un clapet de surpression fermant normalement ledit canal de surpression et apte à ouvrir ledit canal de surpression lorsque la différence de pression entre lesdites chambres dépasse un seuil prédéterminé.

L'invention sera mieux comprise, et d'autres buts, détails, caractéristiques et avantages de celle-ci apparaîtront plus clairement au cours de la description suivante de plusieurs modes de réalisation particuliers de l'invention, donnés uniquement à titre illustratif et non limitatif, en référence aux dessins annexés. Sur ces dessins :
- la figure 1 est une vue d'une articulation selon un premier mode de réalisation de l'invention, en coupe longitudinale selon la ligne I-I de la figure 2
- la figure 2 est une vue de l'articulation, en coupe transversale selon la ligne II-II de la figure 1, associée à un circuit de commande,
- La figure 3 est un schéma hydraulique équivalent de l'articulation de la figure 2,
- La figure 4 est une vue en coupe d'un groupe d'électrovannes selon une variante de réalisation,
- La figure 5 est une vue analogue à la figure 2 représentant une articulation selon un deuxième mode de réalisation de l'invention,
- La figure 6 est une vue en perspective d'un composant de l'articulation de la figure 5,
- La figure 7 est un schéma hydraulique d'une articulation selon un troisième mode de réalisation de l'invention,
- Les figures 8 et 9 représentent une variante d'électrovanne utilisable dans les modes de réalisation des figures 3 et 7,
- La figure 10 est un diagramme représentant la caractéristique force/déplacement de l'articulation de la figure 2 dans plusieurs états de fonctionnement,
- La figure 11 est un schéma hydraulique équivalent d'une articulation selon un quatrième mode de réalisation de l'invention,
- La figure 12 est une vue en coupe d'un circuit hydraulique à électrovannes convenant pour le mode de réalisation de la figure 11.

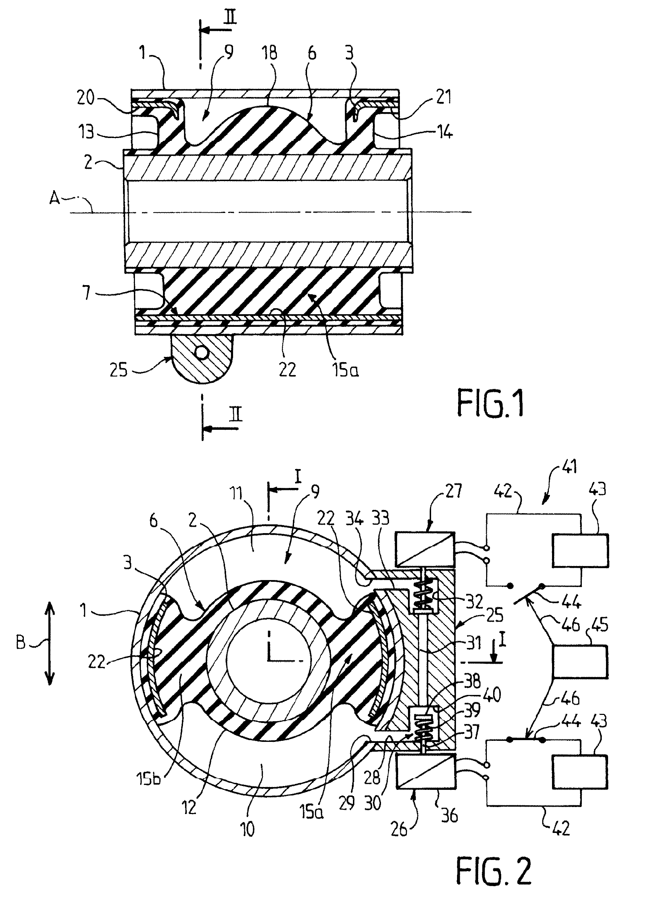

En référence aux figures 1 et 2, on décrit maintenant un premier mode de réalisation de l'invention. Dans ce mode de réalisation, l'articulation est de forme extérieure globalement cylindrique à section circulaire et possède une armature externe 1 et une armature interne 2, qui sont sensiblement cylindriques et coaxiales d'axe A. Ces armatures sont rigides et faites par exemple en métal ou en plastique. L'armature externe 1 et l'armature interne 2 sont destinées à être fixées respectivement à deux pièces d'une structure (non représentées) pour assembler ces pièces et amortir les transmissions de vibrations entre elles. Pour faciliter le montage de l'articulation entre les deux pièces, l'armature interne 2 peut dépasser longitudinalement hors de l'armature externe 1 aux deux extrémités de l'articulation.

Entre les armatures 1 et 2 est monté un élément élastiquement déformable 6 en une composition d'un ou plusieurs élastomère(s) muni d'une armature noyée 7. Un liquide d'amortissement hydraulique remplit un volume 9 défini entre l'élément déformable 6 et la surface intérieure de l'armature externe 1. L'élément déformable 6 présente un forme globale de manchon cylindrique creux adhérisé par sa surface intérieure sur la surface extérieure de l'armature interne 2 et évidé sur sa surface extérieure 12 pour former le volume 9.

La conformation extérieure de l'élément déformable 6 est la suivante : l'élément déformable 6 est évidé dans une partie centrale entre ses deux extrémités axiales, de manière à former au niveau de ses extrémités axiales deux parois annulaires 13 et 14 joignant les armatures interne 2 et externe 1 pour fermer de manière étanche le volume 9, qui sont aussi appelées les joues de l'articulation. Deux bossages axiaux diamétralement opposés 15a et 15b joignent l'une et l'autre des parois 13 et 14 de manière à diviser le volume 9 en deux chambres sensiblement semi-annulaires 10 et 11 symétriques par rapport à un plan contenant l'axe A de l'articulation et les lignes médianes des bossages 15a et 15b. Les deux chambres 10 et 11 sont diamétralement opposées selon une direction B qui définit la direction d'amortissement hydraulique de l'articulation.

Il n'est pas indispensable que les bossages 15a et 15b occupent des positions diamétralement symétriques et d'autres configurations de l'élément déformable 6 sont envisageables selon les exigences de l'application où l'articulation est utilisée. Par exemple, la forme symétrique représentée convient pour une application sans précharge statique substantielle. Dans un cas où l'articulation doit recevoir une précharge statique de direction donnée, il est préférable d'éviter que cette précharge ne sollicite les bossages axiaux en cisaillement pur, car cela déformerait irréversiblement ces parties. Il est donc préférable d'orienter les bossages 15a et 15b dans des directions radiales qui permettent de reprendre la précharge par des contraintes de compression dans les bossages 15a et 15b, c'est-à-dire dans des directions radiales inclinées le long de la direction de précharge, par exemple avec un angle de 120° entre les deux bossages.

Le fond de chaque chambre 10 et 11 peut être formé avec une excroissance respective 18 en saillie radialement vers l'extérieur depuis le centre de la chambre, qui constitue un organe de butée apte à venir en contact contre la surface intérieure de l'armature externe 1 lorsque les armatures 1 et 2 sont décalées l'une par rapport à l'autre selon la direction B. Au delà d'un certain seuil de décalage, une des excroissances 18, selon le sens du décalage, s'appuie contre la surface intérieure 10 de manière à accroître la raideur de l'articulation dans la direction B. Ainsi, les excroissances 18 empêchent une déformation excessive de l'élément déformable 6 dans la direction B pour éviter un endommagement des parois 13 et 14 lorsque l'articulation est soumise à une sollicitation radiale très importante.

L'armature 7 est noyée dans la masse élastique de l'élément déformable 6. L'armature 7 consiste en une portion de tube de sensiblement même longueur que l'armature externe 1 et coaxiale à celle-ci, pourvue dans sa partie centrale de deux ouvertures 3 couvrant chacune un large secteur angulaire, par exemple d'environ 120°, autour de l'axe A. Chacune de ces ouvertures correspond à l'emplacement d'une des chambres 10 et 11 et permet le passage de l'excroissance 18 pour la venue en butée de celle-ci contre l'armature externe 1. Au niveau de ses extrémités axiales, l'armature 7 forme donc deux bagues 20 et 21, qui sont noyées à la périphérie des parois 13 et 14 respectivement et, joignant les bagues 20 et 21, deux bandes 22 parallèles à l'axe A, qui sont noyées dans les bossages 15a et 15b respectivement. L'élément déformable 6 comporte aussi, longitudinalement à l'extérieur des parois d'extrémités 13 et 14, des parties de film recouvrant les extrémités de l'armature interne 2 et l'armature noyée 7.

Les bandes 22 de l'armature noyée 7 sont recouvertes sur leur surface extérieure d'une fine couche de la matière de l'élément déformable 6, qui forme la surface de sommet des bossages 15a et 15b respectivement et qui s'applique de manière étanche contre la surface intérieure de l'armature 1 lors de sa mise en place. La fermeture du volume 9 se fait par emmanchement à force de l'armature externe 1 sur l'élément déformable 6 après remplissage par le liquide d'amortissement. Le remplissage peut être effectué par immersion de l'articulation dans le liquide. Les deux bagues 20 et 21 confèrent à l'élément déformable 6 une forte raideur radiale au niveau des parois 13 et 14 pour assurer un contact étanche avec l'armature externe 1. L'élément déformable 6 n'est pas adhérisé sur l'armature externe 1 mais retenu dans celle-ci par le frottement engendré par une fine pellicule de sa matière écrasée radialement entre l'armature externe 1 et les bagues 20 et 21.

Dans le cas présent, l'articulation hydroélastique est du type à raideur contrôlée. Pour cela, il est prévu un circuit de liaison qui relie les deux chambres 10 et 11 et qui est muni de deux électrovannes 26 et 27 pour contrôler l'écoulement de liquide entre les deux chambres dans le circuit de liaison. Dans le mode de réalisation des figures 1 et 2, le circuit de liaison est essentiellement agencé dans un boîtier extérieur 25 qui est fixé à l'extérieur de l'armature 1. Le circuit le liaison comporte un canal 28 dont une extrémité communique avec la chambre 10 à travers une ouverture 29 pratiquée dans l'armature extérieure 1 et dont l'autre extrémité débouche dans une cavité 30 associée à l'électrovanne 26. Un canal intermédiaire 31 relie la cavité 30 à une cavité 32 associée à l'électrovanne 27 et un canal 33 relie la cavité 32 à la chambre 11 à travers une ouverture 34 ménagée à travers l'armature extérieure 1.

L'électrovanne 26 comporte un actionneur électrique 36, par exemple du type à électroaimant ou à réluctance variable, qui agit sur une tige d'actionneur 37 à l'extrémité libre de laquelle est fixé un clapet 38. Un ressort hélicoïdal 39 est agencé autour de la tige 37 en appui entre une face arrière du clapet 38 et une face opposée de la cavité 30. L'électrovanne 27 est de conception identique. Sur la figure 2, l'électrovanne 27 est représentée dans l'état fermé qui correspond au cas où l'actionneur électrique n'est pas alimenté et l'électrovanne 26 est représentée dans l'état ouvert qui correspond au cas où l'actionneur électrique est alimenté en électricité. Le canal intermédiaire 31 débouche dans la cavité 30 à travers une paroi 40 de la cavité qui fait face au clapet 38. La tige d'actionneur 37 s'étend longitudinalement perpendiculairement à la paroi 40 au droit de l'embouchure du canal intermédiaire 31. Le canal 28 débouche dans la cavité 30 perpendiculairement au canal 31.

Lorsque l'actionneur électrique 36 est alimenté, l'électrovanne 26 se trouve dans l'état ouvert correspondant à un état passant bidirectionnel représenté sur la figure 2, dans lequel elle laisse passer les courants de liquide dans les deux sens entre le canal intermédiaire 31 et la chambre de liquide 10.

Lorsque l'actionneur électrique 36 n'est pas alimenté, le ressort 39 applique le clapet 38 contre la paroi 40. La paroi 40 à la périphérie du canal intermédiaire 31 constitue un siège de clapet contre lequel le clapet 38 s'applique hermétiquement de manière à obturer l'embouchure du canal intermédiaire 31. Cet état (représenté seulement pour l'électrovanne 27) correspond à un état passant unidirectionnel de l'électrovanne. L'état passant unidirectionnel de l'électrovanne 26 peut être facilement déduit de la figure 2, en imaginant le clapet 38 plaqué contre la paroi 40, semblablement à l'électrovanne 27. Dans cet état non représenté de l'électrovanne 26, un courant de liquide ou une onde de pression venant de la chambre 10 à travers le canal 28 ne peut pas atteindre le canal intermédiaire 31 car le clapet 38 en obture l'accès. Au contraire, un tel courant exerce sur le clapet 38 une force dans la même direction que la force du ressort 39 qui contribue à presser le clapet 38 contre la paroi 40.

Inversement, toujours lorsque l'actionneur électrique 36 n'est pas alimenté, un courant de liquide ou une onde de pression venant de la chambre 11 à travers le canal intermédiaire 31 exerce sur le clapet 38 une force à l'encontre de la force du ressort 39 et peut donc déplacer le clapet 38 de manière à l'écarter de la paroi 40 dès lors que la pression dans le canal intermédiaire 31 atteint un niveau suffisant. L'électrovanne 26 dans l'état fermé est donc dans un état passant unidirectionnel dans lequel elle interdit toute circulation de liquide depuis la chambre 10 vers le canal intermédiaire 31 et dans lequel elle autorise un écoulement de liquide en sens inverse depuis le canal intermédiaire 31 vers la chambre 10, moyennant la perte de charge exercée par le clapet 38 et le ressort 39.

Il est inutile de décrire le fonctionnement de l'électrovanne 27 qui est strictement identique à l'électrovanne 26. Toutefois, il est important de noter que le sens passant unidirectionnel de l'électrovanne 27 dans son état fermé représenté va depuis le canal intermédiaire 31 vers la chambre de liquide 11. Ainsi, les électrovannes 26 et 27 ont des sens passants unidirectionnels respectifs qui sont opposés.

Sur la figure 2, on a représenté schématiquement un dispositif de commande 41 des électrovannes 26 et 27. Pour chaque électrovanne, ce dispositif comporte un circuit électrique 42 reliant les deux bornes d'alimentation de l'actionneur électrique à une source de puissance électrique 43 et un interrupteur 44 pour ouvrir ou fermer le circuit électrique 42. Bien sûr, les deux circuits électriques peuvent être raccordés à la même source de puissance, par exemple la batterie du véhicule. Une unité de commande 45 contrôle les interrupteurs 44, comme indiqué par les flèches 46. L'interrupteur 44 de l'électrovanne 27 est à l'état ouvert et l'interrupteur 44 de l'électrovanne 26 est à l'état fermé sur la figure 2. L'unité de commande 45 permet donc, en contrôlant indépendamment les deux électrovannes, de placer le circuit de liaison reliant les deux chambres dans quatre états distincts.

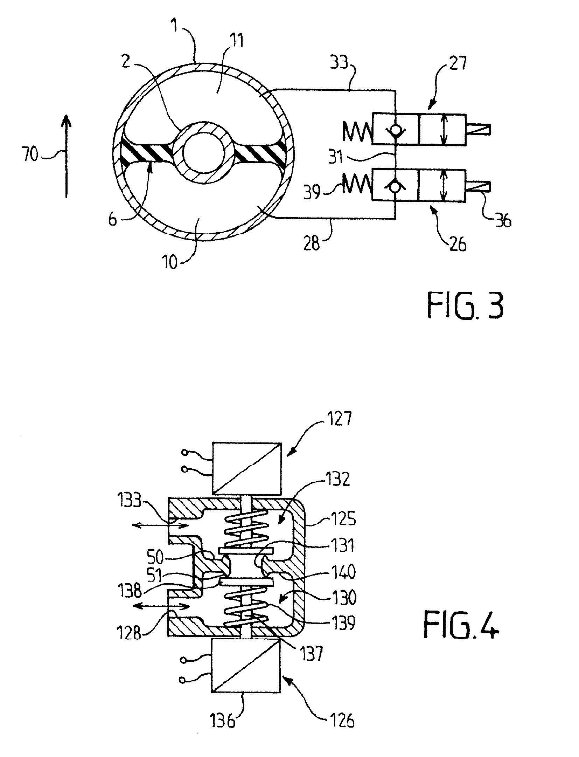

La figure 3 est un schéma hydraulique équivalent de l'articulation hydroélastique de la figure 2. Les mêmes chiffres de référence désignent les mêmes éléments. Sur la figure 3, les deux électrovannes sont dans l'état passant unidirectionnel. D'autres structures permettent d'obtenir un fonctionnement hydraulique équivalent.

La figure 4 représente une variante de conception d'un circuit de liaison extérieur à l'articulation. Les éléments identiques ou similaires aux éléments de la figure 2 portent le même chiffre de référence augmenté de 100. Le boîtier 125 contient l'essentiel du circuit de liaison et peut être fixé sur l'armature extérieure 1 de manière analogue au boîtier 25 de la figure 2. Dans cette variante, le boîtier est plus court avec des parois plus fines et permet ainsi de former une liaison entre les deux chambres 10 et 11, qui présente à la fois une longueur relativement courte et une section de passage relativement large, ce qui présente un effet favorable pour le filtrage des fréquences élevées que l'on rencontre couramment dans les organes de liaison au sol de véhicules automobiles et qui affectent le confort du véhicule, par exemple dans une plage allant d'environ 100 à environ 300 Hz.

Dans le boîtier 125, les cavités 130 et 132 sont séparées seulement par une paroi mince 50 dans laquelle est pratiquée une ouverture circulaire 131 qui relie les deux cavités. La face 140 de la paroi 50 qui reçoit le clapet 138 de l'électrovanne 126 porte autour de l'ouverture 131 une nervure annulaire 51 qui fait saillie vers l'intérieur de la cavité 130. La nervure 51 constitue un siège de clapet contre lequel le clapet 138 peut s'appliquer de manière hermétique. Pour le reste, la conception du circuit de liaison est similaire au mode de réalisation de la figure 2. En particulier, dans l'exemple de la figure 2 comme dans celui de la figure 4, le circuit de liaison est entièrement symétrique. Cependant, cette dernière caractéristique n'est nullement obligatoire. Une articulation hydroélastique munie d'un circuit de liaison selon le mode de réalisation de la figure 4 admet le même schéma hydraulique équivalent que le mode de réalisation de la figure 2, à savoir le schéma représenté sur la figure 3.

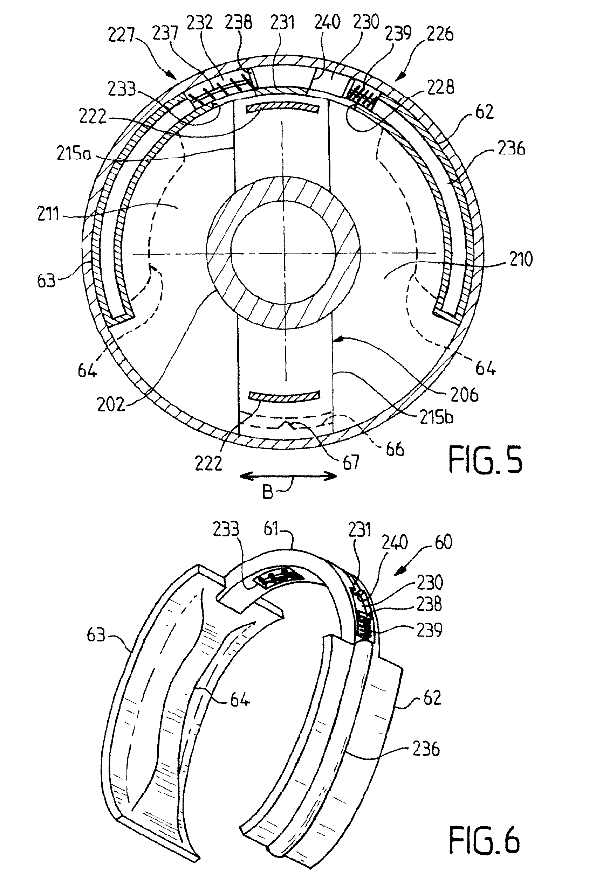

En référence aux figures 5 et 6, on va maintenant décrire un autre mode de réalisation d'articulation hydroélastique admettant encore le même schéma hydraulique équivalent représenté sur la figure 3. Dans ce mode de réalisation, le circuit hydraulique reliant les deux chambres est entièrement à l'intérieur de l'armature extérieure de l'articulation. Les éléments identiques ou similaires à ceux du mode de réalisation des figures 1 et 2 sont désignés par le même chiffre de référence augmenté de 200.

Dans ce mode de réalisation, l'armature noyée dans l'élément élastomère 206 présente une forme légèrement différente de celle décrite dans les figures 1 et 2. En effet, les bandes longitudinales 222 de cette armature noyée qui s'étendent dans les bossages 215a et 215b de l'élément élastomère 206 sont rétreintes radialement vers l'armature intérieure 202 par rapport aux bagues d'extrémité de l'armature noyée. Ainsi, un certain espacement radial est prévu entre les bandes 222 et l'armature extérieure 201 une fois que celle-ci est mise en place. Cet espacement radial, sensiblement égal à la quantité de retreinte radiale des bandes 222 permet de faire passer des canaux de communication entre les deux chambres 210 et 211. Du côté du bossage 215b de l'élément élastomère 206, l'élastomère s'étend radialement jusqu'au rayon intérieur de l'armature extérieure 201 de manière à s'appliquer hermétiquement contre la surface intérieure de l'armature 201. Du côté du bossage 215a, par exemple à mi-longueur de l'articulation, une encoche est ménagée dans le sommet du bossage à l'extérieur de l'armature noyée. Cette encoche à section rectangulaire ménagée dans la direction périphérique de l'articulation entre les deux chambres 210 et 211 sert à faire passer la branche centrale 61 d'un organe de support semi-rigide 60, représenté en perspective sur la figure 6.

L'organe de support 60, qui est réalisé par exemple en matière plastique, présente une forme globale de bague fendue dont le rayon extérieur correspond au rayon intérieur de l'armature 201 et dont le rayon intérieur correspond globalement au rayon extérieur de l'élément élastomère 206. A l'état monté, comme visible sur la figure 5, l'organe de support 60 est agencé entre l'élément en élastomère 206 et l'armature extérieure 201 en étant par exemple encliqueté autour de l'élément élastomère 206 avant emmanchement de l'armature 201. L'organe de support 60 porte de façon à la fois compacte et modulaire tout le circuit de liaison reliant les deux chambres de liquide 210 et 211 et deux électrovannes pour contrôler la circulation de liquide dans ce circuit. Dans l'exemple représenté, l'organe de support 60 présente une branche centrale 61 à section rectangulaire et deux branches d'extrémité 62 et 63 plus larges pour améliorer la stabilité de l'élément de support 60 une fois mis en place. Les trois branches 61, 62 et 63 sont arquées avec le même rayon de courbure. Le circuit de liaison pour relier les deux chambres est ici agencé essentiellement dans la branche centrale 61 qui présente une section en U sur toute sa longueur afin de définir un canal ouvert du côté radialement extérieur de l'organe de support 60. Ce canal présente une portion intermédiaire 231 et deux portions d'extrémité 230 et 232 qui sont plus larges que la portion intermédiaire 231 et qui se raccordent à celle-ci à chaque fois par un épaulement 240. Deux fenêtres rectangulaires 228 et 233 sont ménagées à travers la paroi intérieure de la branche 61 au niveau des portions d'extrémité 230 et 232 du canal respectivement, de manière à faire communiquer ces portions avec les chambres 210 et 211 respectivement, comme visible sur la figure 5. L'organe de support 60 porte deux électrovannes qui permettent d'obturer indépendamment la portion intermédiaire 231 du canal au niveau de ses deux extrémités.

Le circuit de liaison porté par l'organe de support 60 étant entièrement symétrique, il sera encore une fois suffisant de décrire l'électrovanne 226. Celle-ci comporte un actionneur à solénoïde 236 logé dans la branche d'extrémité 62 de l'organe de support et une tige d'actionnement 237 coulissante par rapport au solénoïde et présentant un rayon de cintrage identique correspondant au rayon de courbure de l'organe de support. Un tel actionneur peut être réalisé avec une bobine relativement plate et également cintrée. Un ressort hélicoïdal 239 est agencé autour de la tige d'actionnement 237 en appui contre un clapet 238 fixé à l'extrémité libre de la tige 237 pour permettre d'appliquer hermétiquement le clapet 238 contre l'épaulement 240 lorsque l'actionneur 236 est inactif. Comme dans les modes de réalisation précédents, l'actionneur 236 permet de déplacer le clapet 238 vers une position d'ouverture à l'encontre du ressort 239 comme cela est représenté pour l'électrovanne 226 sur la figure 5. Sur cette figure, l'électrovanne 227 est dans la position fermée qui est une position passante unidirectionnelle puisqu'elle interdit le passage d'un courant ou d'une onde de pression depuis la chambre 211 vers le canal 231 mais qu'elle autorise le passage d'un courant ou d'une onde de pression depuis le canal 231 vers la chambre 211 moyennant la perte de charge imposée par le ressort. Ici encore, les électrovannes 226 et 227 ont des sens passants unidirectionnels respectivement opposés. Lorsque les deux électrovannes 226 et 227 sont à l'état ouvert, le liquide d'amortissement peut circuler librement dans les deux sens entre les chambres 210 et 211 à travers la fenêtre 228, la portion de canal 230, la portion de canal 231, la portion de canal 232 et la fenêtre 233.

Optionnellement, l'organe de support 60 peut comporter des entretoises 64 faisant saillie radialement vers l'intérieur sous les branches 62 et 63 pour pouvoir s'appuyer contre la périphérie de l'élément élastomère 206 afin d'accroître la rigidité de l'articulation. En effet, pour un décalage identique des armatures, les entretoises 64 peuvent réaliser un couplage entre l'armature extérieure 201 et l'élément en élastomère 206 tout en prévoyant des excroissances de butée (non représentées) moins hautes que les excroissances 18 représentées sur la figure 1. En réduisant la hauteur des excroissances de butée en élastomère, on réduit leur souplesse.

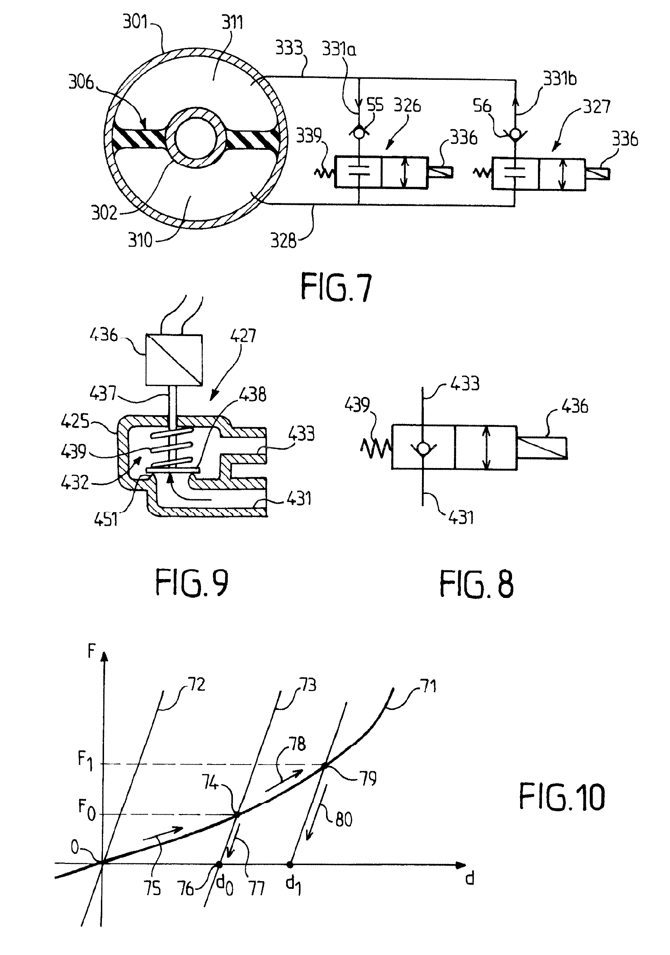

Les conducteurs pour l'alimentation électrique des électrovannes 226 et 227 ont été omis sur les figures 5 et 6. Par exemple, ces conducteurs peuvent cheminer le long de la surface intérieure de l'armature 201 jusqu'à une extrémité de l'articulation. Comme dans le mode de réalisation de la figure 2, l'articulation présente une direction d'amortissement hydraulique indiquée par la flèche B qui est définie par la position mutuelle des deux chambres de liquide 210 et 211. Avec un circuit de commande similaire à celui représenté sur la figure 2, l'articulation peut, de la même manière, être placée dans quatre états de fonctionnement distincts. Ces états de fonctionnement vont maintenant être décrits en référence aux figures 3 et 10.

La figure 10 représente le déplacement d de l'armature 1 par rapport à l'armature 2 en fonction de la force F exercée dans la direction d'amortissement et comptée positivement dans le sens de la flèche 70 de la figure 3. Ce diagramme qui ne représente que les déplacements positifs doit être compris comme étant symétrique par rapport à l'origine dans le cas où l'articulation présente une structure symétrique. L'origine F = 0, d = 0 représente l'état de repos de l'articulation qui est généralement, mais non nécessairement, un état dans lequel l'armature extérieure et l'armature intérieure sont coaxiales, comme dans les modes de réalisation représentés.

Si les deux électrovannes sont dans l'état passant bidirectionnel (actionneur alimenté en électricité), le circuit de liaison permet à du liquide de circuler dans les deux sens entre les deux chambres et l'articulation est donc dans un état de faible raideur, représenté par la courbe 71 de la figure 10. Dans cet état, le niveau de pression dans les chambres reste faible, c'est-à-dire qu'il est limité à des effets dynamiques. Comme visible sur la figure 10, le comportement de l'articulation dans cet état peut être non linéaire, par exemple grâce à la présence de butées qui entrent en action à partir d'un certain niveau de déplacement. Les excroissances 18 représentées sur la figure 1 et les entretoises 64 représentées sur la figure 6 peuvent remplir un tel rôle.

Si les deux électrovannes sont commutées dans l'état passant unidirectionnel (position par défaut d'alimentation électrique représentée sur la figure 3), l'articulation se trouve dans un état de plus forte raideur correspondant à la courbe 72 de la figure 10. En effet, le volume de liquide dans chaque chambre est figé à partir de l'instant de commutation des deux vannes. La commutation a eu lieu dans l'état de repos pour la courbe 72. La courbe 73 représente le comportement de l'articulation dans un cas où la commutation a eu lieu à un moment où une charge avait déjà décalé les armatures, dans un état représenté par le point 74. Dans ce cas, le point d'équilibre dynamique de l'articulation est décalé. La pente des courbes 72 et 73 correspond à la raideur de gonflement de l'articulation, qui est notamment déterminée par la raideur des joues 13 et 14 de l'articulation. Ainsi, il est préférable de concevoir les joues 13 et 14 de manière raide si l'on veut obtenir une différence nette de comportement de l'articulation entre l'état ouvert et l'état fermé des électrovannes, c'est-à-dire un changement de pente important entre la courbe 71 et les courbes 72, 73.

Dans les modes de réalisation décrits ci-dessus, on obtient un état non passant du circuit de liaison en plaçant les deux électrovannes en série dans des états passants unidirectionnels ayant des sens opposés. Comme les courants et ondes de pression, quel que soit leur sens, poussent à chaque fois l'un des deux clapets dans le sens de la fermeture, cet état non passant est maintenu passivement sans qu'il ne soit nécessaire d'employer des ressorts très raides. L'avantage résultant de l'utilisation de ressorts très souples est la faiblesse de l'effort nécessaire pour ouvrir les électrovannes, lequel peut ainsi être exercé par des actionneurs de faible puissance et de faible encombrement, pouvant être logés à l'intérieur de l'articulation le cas échéant. Dans l'état non passant du circuit de liaison, la pression dans les chambres est non nulle et environ proportionnelle à la variation de l'effort F à partir du point de commutation.

Si, comme représenté sur la figure 2, l'électrovanne 26 est dans l'état passant bidirectionnel alors que l'électrovanne 27 est dans l'état passant unidirectionnel, l'articulation se trouve dans un mode de fonctionnement asymétrique analogue à un cliquet mécanique. En effet, l'articulation présente alors un comportement raide vis-à-vis des déplacements tendant à réduire le volume de la chambre 11 et un comportement plus mou vis-à-vis des déplacements tendant à accroître le volume de la chambre 11, c'est-à-dire par exemple un déplacement de l'armature 1 dans le sens de la flèche 70.

Par exemple, partant de l'état de repos O de l'articulation, sur la figure 10, un effort F₀ positif est appliqué sur l'armature 1, provoquant un déplacement de liquide de la chambre 10 vers la chambre 11 et un décalage mutuel des armatures jusqu'au point 74, comme indiqué par la flèche 75. Si l'effort est relâché, l'articulation ne revient pas à l'état de repos O car la vanne 27 empêche le retour de liquide depuis la chambre 11 vers la chambre 10. Comme indiqué par la flèche 77, l'articulation atteint alors un état statique décalé 76 comportant un décalage résiduel d₀ entre les armatures, une surpression correspondante dans la chambre 11 et une dépression correspondante dans la chambre 10.

Dans ce mode de fonctionnement asymétrique, l'articulation se comporte de manière raide contre les efforts F dans le sens négatif, mais se comporte de manière moins raide contre les efforts dans le sens positif. En particulier, comme indiqué par la flèche 78, l'articulation atteint un nouveau point de fonctionnement 79 le long de la courbe 71 si un effort positif F₁ > F₀ est appliqué sur l'armature 1. A partir du point 79, un relâchement total de l'effort F conduit à un nouvel état statique décalé avec un décalage résiduel d₁ > d₀ comme indiqué par la flèche 80. On constate que l'articulation se comporte à la manière d'un cliquet unidirectionnel qui retient de manière stable les décalages dans un sens (ici le sens positif de la figure 10) qui ont été produits naturellement en réponse à un effort subi par l'articulation. Pour ramener le point d'équilibre statique de l'articulation au point O, on peut ouvrir l'électrovanne 27 à tout instant.

Pour l'état asymétrique inverse de la figure 2 (électrovanne 26 fermée, électrovanne 27 ouverte), le fonctionnement est exactement symétrique au fonctionnement décrit ci-dessus.

Les deux états asymétriques des électrovannes peuvent être employés pour obtenir et conserver un décalage (offset) des armatures dans un sens souhaité. Il suffit pour cela de fermer l'électrovanne dont le sens passant unidirectionnel correspond au sens de décalage souhaité et d'ouvrir l'autre électrovanne. Lorsque la sollicitation sur l'articulation ira dans le sens souhaité, le décalage et un transfert de liquide correspondant seront produits naturellement par cette sollicitation. Le décalage sera ensuite conservé en piégeant le liquide transféré tant que cela est souhaité.

D'autres structures de circuit de liaison permettent d'obtenir un fonctionnement analogue à celui de la figure 10, comme par exemple, le circuit de liaison de l'articulation représenté sur la figure 7. Sur cette figure, les éléments identiques ou analogues à ceux du mode de réalisation des figures 1 et 2 portent le même chiffre de référence augmenté de 300.

Le circuit de liaison comporte ici un conduit 328 communiquant avec la chambre 310 à travers une ouverture de l'armature 301 et un conduit 333 communiquant avec la chambre 311 à travers une autre ouverture de l'armature 301.

Deux branches de conduite 331a et 331b relient parallèlement l'une à l'autre un point de la conduite 333 à un point de la conduite 328. La branche 331 a, respectivement 331b, comporte un clapet anti-retour 55, respectivement 56, en série avec une électrovanne 326, respectivement 327. Les clapets anti-retour sont par exemple des clapets à billes tarés par ressort. Les deux électrovannes sont identiques et comprennent un état non passant, représenté sur la figure 7, et un état passant bidirectionnel pouvant être atteint sous l'action d'un actionneur électrique ou électromagnétique 336. Un ressort 339 commute la vanne dans l'état non passant par défaut d'alimentation de l'actionneur 336.

L'articulation comporte quatre états de fonctionnement distincts, un état raide correspondant à l'absence de circulation de liquide dans la position non passante des deux vannes, un état plus mou correspondant à la position passante des deux vannes et deux états asymétriques inverses l'un de l'autre, correspondant à chaque fois à une vanne en position passante et une vanne en position non passante. Le fonctionnement de l'articulation dans ces quatre états est similaire au fonctionnement décrit plus haut en référence à la figure 10.

La figure 9 représente une variante de réalisation d'une électrovanne utilisable dans un circuit de liaison du type illustré sur la figure 3. L'électrovanne 427 présente des éléments identiques ou analogues aux éléments constitutifs de l'électrovanne 27 de la figure 2, qui portent un chiffre de référence identique augmenté de 400. Cependant, l'électrovanne 427 est agencée dans un boîtier individuel 425 qui définit le canal 433 destiné à relier la cavité 432 à la chambre 11 et le canal 431 destiné à relier la cavité 432 à l'autre électrovanne. L'autre électrovanne peut être conçue symétriquement. Une nervure 451 forme un siège de clapet sur la paroi intérieure de la cavité 432 autour de l'embouchure du canal 431. La figure 8 représente le schéma hydraulique équivalent de l'électrovanne 427. Le boîtier 425 peut être fixé sur l'armature extérieure de l'articulation.

Selon encore un autre mode de réalisation de l'articulation, on utilise l'électrovanne représentée sur la figure 9 dans un circuit de liaison à deux branches parallèles. Par exemple, on remplace le clapet anti-retour 56 et l'électrovanne 327 par l'électrovanne 427 sur la branche 331b dans le schéma de la figure 7. On procède à une substitution analogue sur la branche 331a, avec une électrovanne symétrique de l'électrovanne 427. Dans ce mode de réalisation, l'articulation peut encore être commutée dans quatre états de fonctionnement distincts. Lorsque les deux électrovannes sont dans leur état passant bidirectionnel (actionneur alimenté), l'articulation est dans un état mou puisque le liquide peut s'écouler dans les deux sens à travers chaque branche 331a et 331b entre les deux chambres. Lorsque les deux électrovannes sont dans l'état passant unidirectionnel (actionneur non alimenté) l'articulation est dans un état plus raide puisque le liquide ne peut s'écouler qu'à travers l'une des deux branches de circuit 331a et 331b dans chaque sens entre les deux chambres. Lorsqu'une électrovanne est dans l'état passant bidirectionnel (électrovanne alimentée) et l'autre dans l'état passant unidirectionnel (électrovanne non alimentée), l'articulation se trouve dans un état asymétrique dans lequel la raideur correspondant aux décalages dans un sens est plus faible que la raideur correspondant aux décalages en sens opposé. En effet, pour une sollicitation qui tend à transférer le liquide dans le sens passant unidirectionnel de l'électrovanne non alimentée, le liquide peut passer de la chambre d'origine à la chambre de destination en empruntant les deux branches parallèles du circuit de liaison. A l'inverse, pour une sollicitation en sens opposé, le liquide ne peut pas traverser l'électrovanne non alimentée dans son sens bloqué et ne peut donc emprunter que la branche dans laquelle l'électrovanne est alimentée (ouverte), ce qui rend l'écoulement de liquide plus difficile que dans le premier sens et accroît donc la rigidité de l'articulation de manière asymétrique. Dans ce mode de réalisation, les deux états asymétriques des électrovannes ne permettent pas de maintenir de manière statique un décalage entre les armatures, mais seulement de procurer un temps de relaxation du liquide plus long dans un sens que dans l'autre, ce qui permet de ralentir le retour de l'articulation vers l'état de repos après qu'un décalage correspondant à un transfert de liquide dans le sens passant unidirectionnel de l'électrovanne s'est produit.

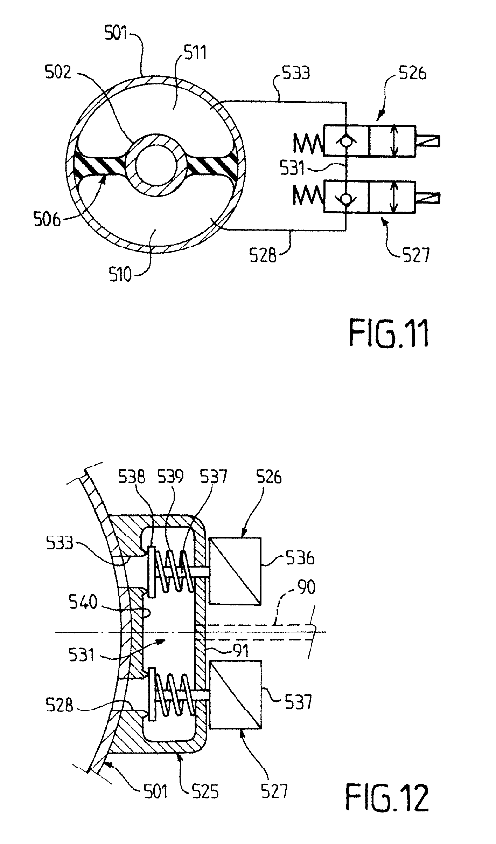

La figure 11 est un schéma analogue à la figure 3, représentant une articulation hydroélastique selon un autre mode de réalisation. Les éléments identiques ou similaires aux éléments du mode de réalisation de la figure 2 portent le même chiffre de référence augmenté de 500.

Par rapport au mode de réalisation des figures 2 et 3, la différence essentielle est la permutation des électrovannes. L'électrovanne 526 dont le sens passant unidirectionnel est orienté depuis la chambre 511 vers la chambre 510 est placée du côté de la chambre 511 tandis que l'électrovanne 527 dont le sens passant unidirectionnel est orienté depuis la chambre 510 vers la chambre 511 est placée du côté de la chambre 510. Ainsi, le fonctionnement de l'articulation est identique au fonctionnement décrit en référence à la figure 2, hormis quant à l'état de pression du canal intermédiaire 531 situé entre les deux électrovannes. Dans le mode de réalisation des figures 1 et 2, une électrovanne à l'état non alimenté s'ouvre seulement lorsque la pression dans le canal 31 dépasse la pression régnant dans la chambre de l'articulation située de l'autre côté de l'électrovanne. Ainsi, les électrovannes ont tendance à toujours faire communiquer le canal intermédiaire 31 avec celle des deux chambres 10 et 11 où la pression est la plus basse. Le canal 31 est donc toujours dans un état de pression relativement bas quel que soit le mode de fonctionnement de l'articulation, en particulier dans le mode plus raide et dans les modes asymétriques. Dans le mode de réalisation de la figure 11, une électrovanne à l'état non alimenté s'ouvre seulement lorsque la pression dans le canal 531 est inférieure à la pression régnant dans la chambre de l'articulation située de l'autre côté de l'électrovanne. Ainsi, les électrovannes ont tendance à toujours faire communiquer le canal intermédiaire 531 avec celle des deux chambres 510 et 511 où la pression est la plus haute. Le canal 531 est donc toujours dans un état de pression relativement haut quel que soit le mode de fonctionnement de l'articulation, en particulier dans le mode plus raide et dans les modes asymétriques.

La figure 12 représente une réalisation possible du circuit hydraulique de la figure 11. Ce circuit est formé dans un boîtier 525 destiné à être fixé sur l'armature extérieure de l'articulation comme le boîtier 25 de la figure 2, par tout moyen de fixation approprié (colle, soudure ou autre).

Le boîtier 525 comporte un logement allongé 531 qui s'étend dans une direction tangente à la surface de l'armature extérieure. La paroi 540 tournée vers l'articulation comporte deux passages cylindriques 528 et 533 destinés à communiquer avec les chambres 510 et 511 à travers des perçages correspondants de l'armature 501. La paroi 91 du boîtier tournée à l'opposé de la paroi 540 porte les actionneurs électriques 536 et 537 des deux électrovannes. L'électrovanne 526 comporte une tige d'actionneur 537 qui s'étend en travers du logement 531 dans l'axe du passage 533 et dont l'extrémité libre porte un clapet 538 qui s'applique de manière étanche contre la paroi 540 autour de l'embouchure du passage 533 de manière à obturer ce passage, sous l'action du ressort 539. Une nervure circulaire saillante vers l'intérieur du logement 531 peut être prévue sur la paroi 540 en tant que siège de clapet. L'électrovanne 527 est conçue identiquement et est placée à l'autre extrémité du logement 531 au droit du passage 528.

Optionnellement, on peut prévoir un conduit 90 débouchant dans le logement 531, par exemple à travers la paroi 91, de manière à relier le volume de liquide se trouvant entre les deux électrovannes à un autre composant hydraulique, par exemple un capteur de pression, une alimentation en fluide sous pression, un clapet de décharge ou autre.

Les articulations décrites ci-dessus sont conçues pour être dans l'état le plus raide par défaut d'alimentation des électrovannes. On peut concevoir similairement une articulation molle par défaut en permutant le rôle de l'organe de rappel et de l'actionneur dans les électrovannes.

En plus de la liaison contrôlée par les vannes, l'articulation peut comporter un ou plusieurs canaux de surpression destinés à relier les chambres en cas de très forte sollicitation de l'articulation, afin d'éviter un éclatement de l'articulation. De tels canaux ayant une fonction de sécurité sont connus en eux-mêmes. Par exemple, on a représenté sur la figure 6 un canal de surpression 66 ménagé à travers le bossage 215b radialement à l'extérieur de l'armature noyée et muni d'une lèvre de clapet 67 fortement comprimée contre la paroi opposée du canal 66 de manière à obturer le canal de surpression 66 mais à s'ouvrir si le différentiel de pression entre les chambres atteint un niveau élevé.

Le circuit hydraulique reliant les deux chambres peut être à l'intérieur ou à l'extérieur de l'armature extérieure de l'articulation. Dans le second cas, il peut être supporté par l'armature extérieure ou aussi, au moins partiellement, cheminer à distance de l'armature extérieure de l'articulation en étant supporté éventuellement par d'autres supports.

Bien que l'invention ait été décrite en liaison avec plusieurs modes de réalisation particuliers, il est bien évident qu'elle n'y est nullement limitée et qu'elle comprend tous les équivalents techniques des moyens décrits ainsi que leurs combinaisons si celles-ci entrent dans le cadre de l'invention.

Les circuits hydrauliques représentés ou décrits dans les modes de réalisation qui précèdent peuvent être utilisés dans d'autres applications que les articulations hydroélastiques, par exemple dans tout système hydraulique de contrôle, qu'il s'agisse par exemple de machines industrielles, d'engins de travaux publics ou d'accumulateurs de pression. Un conduit pour liquide ou pour gaz qui comporte deux électrovannes du type décrit agencées de manière à présenter des sens passants unidirectionnels mutuellement opposés présente divers avantages, en ce qu'il permet de relier deux enceintes de liquide ou de gaz selon quatre modes de connexion distincts, selon l'état respectif des électrovannes, tout en présentant un encombrement faible et une faible consommation électrique.

## Revendications

1. Articulation hydroélastique destinée à assembler deux pièces en amortissant des vibrations transmises entre l'une et l'autre, ladite articulation comportant une armature extérieure (1, 201, 301, 501) et une armature intérieure (2, 202, 302, 502) disposées l'une autour de l'autre et un élément élastiquement déformable (6, 206, 306, 506) agencé entre lesdites armatures de manière à permettre un déplacement relatif entre lesdites armatures, ledit élément élastiquement déformable étant conformé de manière à définir, entre lesdites armatures, un volume contenant un liquide d'amortissement et comprenant au moins deux chambres (10, 11 ; 210, 211 ; 310, 311 ; 510, 511) opposées selon une direction d'amortissement prédéfinie (B), ladite articulation comportant un circuit de liaison reliant lesdites chambres et des moyens de contrôle d'écoulement commutables dans plusieurs états pour modifier une résistance à l'écoulement dudit circuit de liaison entre les deux chambres,
**caractérisée par le fait que** lesdits moyens de contrôle d'écoulement (26, 27 ; 126, 127 ; 226, 227 ; 326, 327 ; 427 ; 526, 527) présentent un premier état asymétrique dans lequel la résistance à l'écoulement du circuit de liaison est plus faible dans un premier sens allant d'une première desdites chambres à une seconde desdites chambres que dans un second sens allant de ladite seconde chambre à ladite première chambre et un second état asymétrique dans lequel la résistance à l'écoulement du circuit de liaison est plus faible dans ledit second sens que dans ledit premier sens.

2. Articulation hydroélastique selon la revendication 1, **caractérisée par le fait que** le premier état asymétrique et le second état asymétrique sont deux états passants unidirectionnels dans lesquels les moyens de contrôle d'écoulement interdisent un écoulement de liquide d'amortissement dans le second sens et dans le premier sens respectivement.

3. Articulation hydroélastique selon la revendication 1 ou 2, **caractérisée par le fait que** lesdits moyens de contrôle d'écoulement comportent deux vannes commandées (26, 27 ; 126, 127 ; 226, 227 ; 326, 327) agencées dans le circuit de liaison entre ladite première chambre et ladite seconde chambre, chacune desdites vannes présentant un état passant bidirectionnel et un état passant unidirectionnel, une première (27) desdites vannes présentant un état passant unidirectionnel orienté dans ledit premier sens (70) et une seconde (26) desdites vannes présentant un état passant unidirectionnel orienté dans ledit second sens.

4. Articulation hydroélastique selon la revendication 3, **caractérisée par le fait que** lesdites deux vannes (26, 27 ; 126, 127 ; 226, 227 ; 526, 527) sont agencées en série entre la première chambre et la seconde chambre.

5. Articulation hydroélastique selon la revendication 4, **caractérisée par le fait que** ladite première vanne (27) est agencée du côté de la seconde chambre (11) et ladite seconde vanne (26) est agencée du côté de la première chambre (10).

6. Articulation hydroélastique selon l'une des revendications 3 à 5, **caractérisée par le fait que** ledit circuit de liaison comporte des moyens de guidage d'écoulement (28-33 ; 128-133 ; 228-233) pour guider un écoulement du liquide d'amortissement entre lesdites chambres, chacune des deux vannes commandées comprenant un clapet (38, 138, 238) agencé à l'intérieur desdits moyens de guidage d'écoulement et mobile entre une position d'obturation correspondant à l'état passant unidirectionnel de la vanne, dans laquelle ledit clapet sépare deux portions (30, 31 ; 130, 131 ; 230, 231) des moyens de guidage d'écoulement et au moins une position d'ouverture correspondant à l'état passant bidirectionnel de la vanne, dans laquelle le clapet rétablit une continuité fluidique entre les deux portions des moyens de guidage d'écoulement, un organe de rappel (39) sollicitant ledit clapet vers ladite position d'obturation et un actionneur (36, 136, 236) apte à déplacer ledit clapet vers ladite au moins une position d'ouverture, le clapet dans ladite position d'obturation étant agencé de manière que la pression du liquide d'amortissement dans une desdites portions des moyens de guidage d'écoulement sollicite ledit clapet vers la position d'ouverture à l'encontre dudit organe de rappel tandis que la pression du liquide d'amortissement dans l'autre desdites portions des moyens de guidage d'écoulement sollicite ledit clapet vers la position d'obturation.

7. Articulation hydroélastique selon la revendication 6, **caractérisée par le fait que** le clapet est guidé selon une direction correspondant sensiblement à la direction d'écoulement du liquide d'amortissement dans lesdits moyens de guidage d'écoulement.

8. Articulation hydroélastique selon la revendication 6 ou 7, **caractérisée par le fait que** lesdits moyens de guidage d'écoulement comprennent un boîtier (25, 125, 425) agencé à l'extérieur de l'armature extérieure (1, 301) de l'articulation, ledit boîtier comportant des parois délimitant un volume intérieur (30, 32 ; 130, 132 ; 432), lesdites parois étant percées de deux ouvertures agencées de manière à faire communiquer ledit volume intérieur en direction de chacune des deux chambres, ledit clapet étant mobile dans ledit volume intérieur, ledit clapet étant apte à s'appliquer de manière étanche contre la face intérieure (40, 140) d'une paroi du boîtier autour d'une desdites ouvertures.

9. Articulation hydroélastique selon la revendication 8, **caractérisée par le fait que** ledit organe de rappel (39, 139, 439) est un ressort hélicoïdal en appui entre le clapet et une paroi du boîtier.

10. Articulation hydroélastique selon la revendication 8 ou 9, **caractérisée par le fait que** les clapets des deux vannes sont agencés dans deux volumes intérieurs (130, 132) d'un boîtier commun (125) présentant une paroi interne (50) séparant les deux volumes intérieurs, ladite paroi interne étant percée d'une ouverture de liaison (131) reliant les deux volumes intérieurs, les sièges de clapet (51) des deux vannes étant formés sur les deux faces de ladite paroi interne autour de ladite ouverture de liaison.

11. Articulation hydroélastique selon l'une des revendications 3 à 7, **caractérisée par le fait que** les deux chambres (210, 211) sont définies par des dégagements ménagés sur la surface de l'élément élastiquement déformable (206) tournée vers l'armature extérieure, l'articulation comportant un élément de support intermédiaire (60) agencé entre l'armature extérieure (201) et l'élément élastiquement déformable, ledit élément de support comportant une première portion d'extrémité (62) située au droit de la première chambre (10), une deuxième portion d'extrémité (63) située au droit de la deuxième chambre (211) et une portion intermédiaire (61) reliant lesdites première et deuxième portions d'extrémité en étant insérée hermétiquement entre l'armature extérieure et l'élément élastiquement déformable, ledit circuit de liaison comportant un canal de liaison (230, 231, 232) ménagé dans ledit élément de support, ledit canal de liaison présentant deux extrémités (228, 233) communiquant avec les première et deuxième chambres respectivement, lesdites première et deuxième vannes comportant chacune un actionneur (236) fixé à l'une respective desdites portions d'extrémité et un clapet mobile (238) apte à obturer ledit canal de liaison dans l'état passant unidirectionnel de la vanne.

12. Articulation hydroélastique selon la revendication 11, **caractérisée par le fait que** l'articulation présente une forme globale à section circulaire, l'élément de support (60) présentant une forme cintrée correspondante.

13. Articulation hydroélastique selon l'une des revendications 1 à 7 et 11 à 12, **caractérisée par le fait que** ledit circuit de liaison (228-233) et lesdits moyens de contrôle d'écoulement (226, 227) sont agencés essentiellement entre l'armature extérieure et l'élément élastiquement déformable.

14. Articulation hydroélastique selon l'une des revendications 1 à 3, **caractérisée par le fait que** le circuit de liaison comporte une première branche de circuit (331b) ayant deux extrémités en communication avec les deux chambres (310, 311) respectivement et une seconde branche de circuit (331a) ayant deux extrémités en communication avec les deux chambres respectivement, ladite seconde branche de circuit contournant ladite première branche de circuit, les moyens de contrôle d'écoulement comportant une vanne (326, 327 ; 427) agencée sur chacune des deux branches.

15. Articulation hydroélastique selon la revendication 14, **caractérisée par le fait que** ladite première branche de circuit comporte un premier organe d'obturation unidirectionnel (56) qui est passant dans le premier sens et bloqué dans le second sens et une première vanne commandée (327) agencée en série avec ledit premier organe d'obturation unidirectionnel, ladite seconde branche de circuit comportant un second organe d'obturation unidirectionnel (55) qui est passant dans le second sens et bloqué dans le premier sens et une seconde vanne commandée (326) agencée en série avec ledit second organe d'obturation unidirectionnel, lesdites première et seconde vannes commandées présentant chacune un état passant pour autoriser un écoulement dans la branche de circuit correspondante et un état non passant pour interdire un écoulement dans la branche de circuit correspondante.

16. Articulation hydroélastique selon l'une des revendications 1 à 15, **caractérisée par le fait que** lesdits moyens de contrôle d'écoulement comportent au moins une électrovanne (26, 27, 126, 127, 226, 227, 326, 327, 427).

17. Articulation hydroélastique selon l'une des revendications 1 à 16, **caractérisée par le fait que** lesdits moyens de contrôle d'écoulement présentent un état non passant interdisant tout écoulement dans le circuit de liaison dans les deux sens entre les deux chambres.

18. Articulation hydroélastique selon l'une des revendications 1 à 17, **caractérisée par le fait que** lesdits moyens de contrôle d'écoulement présentent un état passant symétrique dans lequel la résistance à l'écoulement dans le circuit de liaison entre les deux chambres est sensiblement égale dans les deux sens.

19. Articulation hydroélastique selon l'une des revendications 1 à 18, **caractérisée par le fait qu'**elle comporte au moins un canal de surpression (66) de plus grande section efficace que ledit circuit de liaison qui relie lesdites deux chambres en contournant ledit circuit de liaison, ledit canal de surpression comportant un clapet de surpression (67) fermant normalement ledit canal de surpression et apte à ouvrir ledit canal de surpression lorsque la différence de pression entre lesdites chambres dépasse un seuil prédéterminé.
